# EUROPÄISCHE PATENTSCHRIFT

(11) **EP 1 608 530 B1**
(45) Veröffentlichungstag und Bekanntmachung des Hinweises auf die Patenterteilung: **26.05.2010**
(21) Anmeldenummer: 04722276.5
(22) Anmeldetag: 22.03.2004
(51) Int. Cl.: B60N 2/48, A47C 7/38

(54) **KOPFSTÜTZE, INSBESONDERE FÜR EINEN KRAFTFAHRZEUGSITZ**
HEADREST, PARTICULARLY FOR A MOTOR VEHICLE SEAT
APPUI-TETE, UTILISE EN PARTICULIER POUR UN SIEGE DE VEHICULE

(30) Priorität: 20.03.2003 DE 10313797
(43) Veröffentlichungstag der Anmeldung: 28.12.2005
(73) Patentinhaber: Volkswagen Aktiengesellschaft, 38436 Wolfsburg (DE); GRAMMER AG, 92224 Amberg (DE)
(72) Erfinder: SCHMUDA VON TRZEBIATOWSKI, Peter, 38170 Ampleben (DE); SIKORA, Marian, 40599 Düsseldorf (DE); LIST, Ronald, 92256 Hahnbach (DE)
(74) Vertreter: Schneider, Henry
(86) Internationale Anmeldenummer: PCT/EP2004/003007
(87) Internationale Veröffentlichungsnummer: WO 2004/082988

(56) Entgegenhaltungen:
- DE-A- 10 005 196
- DE-U- 20 204 949
- GB-A- 1 592 141
- US-A- 4 720 146
- US-A- 6 079 776
- US-B1- 6 250 716
- PATENT ABSTRACTS OF JAPAN Bd. 1998, Nr. 05, 30. April 1998 (1998-04-30) -& JP 10 023941 A (KOITO IND LTD), 27. Januar 1998 (1998-01-27)

## Beschreibung

Die Erfindung betrifft eine Kopfstütze, insbesondere für einen Kraftfahrzeugsitz.

Kopfstützen, insbesondere für Kraftfahrzeugsitze sind hinlänglich bekannt. Diese sind insbesondere gemäß bekannter Ausführungen höhenverstellbar in Bezug auf einen Kraftfahrzeugsitz ausgebildet. Es sind auch bereits Kopfstützen bekannt, die mit separat verstellbaren Flügeln ausgestattet sind.

So ist aus dem älteren Patent DE 102 09 187 C1 eine Kopfstütze bekannt, die über ein Gestänge mit einem Fahrzeugsitz verbunden ist, die ein Mittelpolster und zwei rechts und links an das Mittelpolster anschließend angeordnete Seitenpolster aufweist, wobei die Seitenpolster von einer zurückgeschwenkten Stützposition in eine vorgeschwenkte Anlageposition schwenkbar sind. Die Kopfstütze ist ferner in ihrer Neigung relativ zu einer Rückenlehne des Fahrzeugsitzes verschwenkbar.

Aus DE 195 28 716 A1 ist eine weitere Kopfstütze für einen eine Rückenlehne aufweisenden Fahrzeugsitz, mit einem an zwei Stützstangen zur Halterung in der Rückenlehne befestigtem Kopfpolster und zwei dem Kopfpolster zugeordneten Schlummerwangen, die in Gebrauchslage seitlich am Kopfpolster über dessen Polsterfront vorstehen und in der Nichtgebrauchslage innerhalb der Kontur des Kopfpolsters aufgenommen sind, bekannt. Jede Schlummerwange ist auf einem vertikalen Rohrabschnitt schwenkbar gelagert, der seinerseits an einer Stützstange um eine dazu querverlaufende Schwenkachse schwenkbeweglich befestigt ist.

Ferner sind aus DE 197 54 168 A1, DE 202 05 348 U1 und DE 197 24 764 C1 Kopfstützen für Sitze bekannt, die seitliche um eine im Wesentlichen vertikale Drehachse verlagerbare Kopfstützenelemente umfassen.

Schließlich ist aus der DE 100 05 196 A1 eine Kopfstütze an einem Fahrzeugsitz mit zwei seitlichen, zwischen einer Ruhelage und einer Ausstell-Lage verlagerbaren Auflageteilen bekannt, die in der Ruhelage etwa in einer Fahrzeugquerebene verlaufen, während sie in der Ausstell-Lage mit einer Fahrzeuglängsebene einen zur Fahrzeugfrontseite hin offenen, spitzen Winkel einschließen. Diese Auflageteile sind über Haltebügel mit in der Kopfstütze angeordneten Führungselementen reibschlüssig verbunden.

Aufgabe der Erfindung ist, eine Kopfstütze zu schaffen, die sich durch eine komfortable Handhabung auszeichnet und deren Einstellmöglichkeiten über einen einfachen Aufbau der Kopfstütze ermöglicht wird.

Erfindungsgemäß wird diese Aufgabe durch eine Kopfstütze mit den im Anspruch 1 genannten Merkmalen gelöst.

Die Kopfstütze, insbesondere für einen Kraftfahrzeugsitz, umfasst wenigstens ein, relativ zu einer Halteeinrichtung der Kopfstütze verlagerbares Element eines ersten Teiles, welches mit einem zweiten Teil in Verbindung steht, wobei wenigstens ein Element des ersten Teiles um wenigstens eine vertikale Drehachse verlagerbar und das erste Teil über wenigstens eine reibschlüssige Verbindung mit dem zweiten Teil verbunden ist. Erfindungsgemäß ergibt sich dadurch, dass das wenigstens eine Element des ersten Teiles Reibelemente mit randoffenen Schlitzen umfasst, in die am zweiten Teil ausgebildete Führungselemente eingreifen, wodurch das wenigstens eine Element des ersten Teiles in jeweils wählbaren, verlagerten Positionen im Inneren der Kopfstütze feststellbar ist. Dadurch weist die Kopfstütze einen einfachen Aufbau und verschiedene Einstellungsmöglichkeiten auf. Insbesondere sind somit stufenlose und/oder stufenweise Verstellungen von seitlichen Teilelementen (Ohren) der Kopfstütze möglich.

Hierdurch ist ferner eine Neigungsverstellung des ersten Teiles der Kopfstütze oder in bevorzugter Ausgestaltung der Erfindung der Kopfstütze durch eine Schwenkbewegung des zweiten Teiles relativ zu der Halteeinrichtung unter Mitverlagerung des ersten Teiles insgesamt, hier insbesondere um eine im oberen Bereich der Kopfstütze liegende horizontale Drehachse, vorzugsweise nach vorne, das heißt in Fahrtrichtung, möglich.

Bei dieser zweiteiligen Kopfstütze ermöglicht das wenigstens eine Element des ersten Teiles die Verlagerung um die wenigstens eine vertikale Drehachse und ein zweites Teil die Verlagerung der Kopfstütze insgesamt um die wenigstens eine horizontale Drehachse. Hierdurch wird in besonders einfacher Weise die Einstellmöglichkeit der Kopfstütze gewährleistet. Eine Verlagerung um die wenigstens eine vertikale Drehachse und eine Verlagerung um die wenigstens eine horizontale Drehachse können so in einfacher Weise überlagert werden.

Dadurch dass zumindest Teilbereiche des ersten Teiles relativ zu dem zweiten Teil stufenlos verlagerbar sind, insbesondere wenn diese Teilbereiche des ersten Teiles die seitlichen Teilelemente der Kopfstütze bilden, kann so eine individuelle Einstellung der Polsterauflage der Kopfstütze erfolgen, so dass entsprechend eine benutzerdefinierte Positionierung möglich ist. Hierdurch lassen sich individuelle Komforteinstellungen ermöglichen.

Ferner ist in bevorzugter Ausgestaltung der Erfindung vorgesehen, dass das zweite Teil, vorzugsweise über eine weitere reibschlüssige Verbindung, mit der Halteeinrichtung der Kopfstütze verbunden ist. Hierdurch lässt sich in einfacher Weise eine Schwenkbewegung der Kopfstütze um die horizontale Drehachse verwirklichen. So ist insbesondere auch hier eine stufenlose Verstellung der Kopfstütze möglich. Durch die vorzugsweise vorgesehene reibschlüssige Verbindung zwischen dem ersten Teil und dem zweiten Teil wird bei Schwenkbewegung des zweiten Teiles relativ zur Halteeinrichtung der Kopfstütze und damit zum die Kopfstütze aufweisenden Sitz, insbesondere Kraftfahrzeugsitz, auch das erste Teil um die horizontale Drehachse mitverlagert. Entsprechend der Verlagerung um die horizontale Drehachse beziehungsweise um die wenigstens eine vertikale Drehachse lässt sich somit eine sehr individuell angepasste Einstellung der Kopfstütze durchführen.

Darüber hinaus ist in bevorzugter Ausgestaltung der Erfindung vorgesehen, dass das erste Teil der Kopfstütze dreiteilig ausgebildet ist, wobei die Verbindung der Teile vorzugsweise über jeweils ein Filmscharnier erfolgt. Hierdurch wird vorzugsweise möglich, das erste Teil als einteilige Kopfanlage auszubilden, wobei zwei seitliche Teilelemente ausgebildet sind, die eine individuelle Verstellung der Kopfstütze in eine so genannte Schlummerstellung ermöglicht. Die Optik wird hierdurch nicht beeinträchtigt.

Weitere bevorzugte Ausgestaltung der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert. Es zeigen:
- Figuren 1 bis 3: verschiedene Ansichten der erfindungsgemäßen Kopfstütze in einer ersten Position;
- Figur 4: eine Draufsicht auf die Kopfstütze in einer zweiten Position;
- Figur 5: eine perspektivische Ansicht eines ersten Teiles der Kopfstütze und
- Figur 6: eine perspektivische Ansicht eines zweiten Teiles der Kopfstütze.

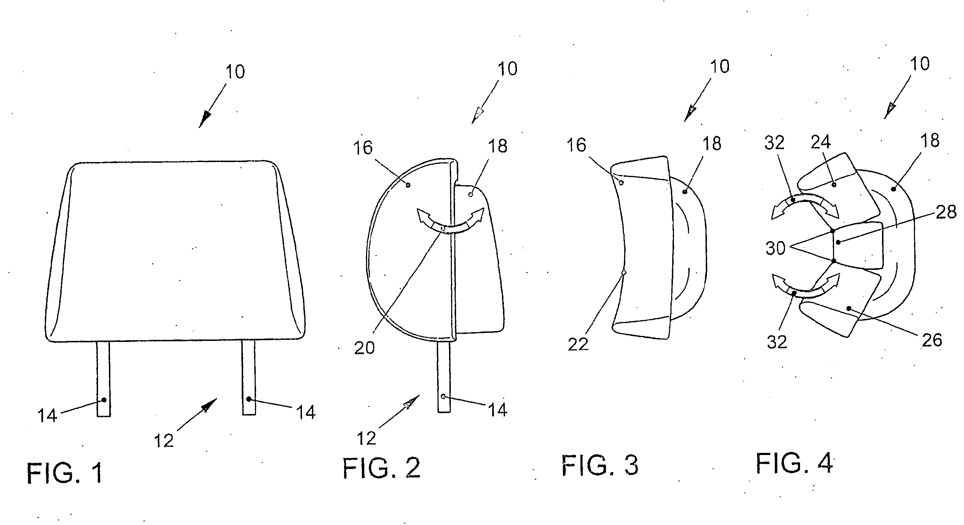

Figur 1 zeigt eine insgesamt mit 10 bezeichnete Kopfstütze, die über eine Halteeinrichtung 12 mit einem nicht dargestellten Kraftfahrzeugsitz verbindbar ist. Die Halteeinrichtung 12 umfasst in an sich bekannter Weise Haltestangen 14, die in entsprechende Ausnehmungen des Kraftfahrzeugsitzes einbringbar sind. Hierbei kann eine mechanische und/oder elektrische Höhenverstellung der Kopfstütze 10 in an sich bekannter Weise erfolgen.

Figur 2 zeigt eine Seitenansicht der Kopfstütze 10, wobei deutlich wird, dass diese aus einem ersten Teil 16 und einem zweiten Teil 18 besteht. Das erste Teil 16 ist hierbei in Fahrtrichtung angeordnet, also einer den Fahrzeugsitz benutzenden Person zugewandt. Das Teil 18 ist entsprechend entgegen der Fahrtrichtung angeordnet. Die Kopfstütze 10 ist entsprechend einem angedeuteten Doppelpfeil 20 um eine im Wesentlichen horizontale Drehachse relativ zur Halteeinrichtung 12 und somit zum Fahrzeugsitz verschwenkbar. Hierbei ist eine Neigungsverstellung der Kopfstütze 10 in einem Winkelbereich zwischen 0° und 45°, insbesondere zwischen 10° und 20°, vorzugsweise 15°, möglich.

Figur 3 zeigt eine Draufsicht auf die Kopfstütze 10. Es wird deutlich, dass das Teil 16 in Fahrtrichtung eine konkave Auswölbung 22 besitzt. Die die Auswölbung 22 bildende Fläche dient als Kopfanlagefläche für eine den Kraftfahrzeugsitz nutzende Person.

Figur 4 zeigt eine weitere Draufsicht auf die Kopfstütze 10, wobei deutlich wird, dass das Teil 16 aus drei Teilelementen 24, 26 und 28 besteht. Die Teilelemente 24 und 26 sind mit dem Teilelement 28 jeweils über ein Filmscharnier 30 verbunden. Durch die Ausbildung der Filmscharniere 30 wird möglich, dass die seitlichen Teilelemente 24 und 26 um im Wesentlichen vertikal verlaufende Drehachsen relativ zum Teilelement 28 verlagerbar sind. Entsprechend der angedeuteten Doppelpfeile 32 ist hierbei eine Verlagerung in Winkelbereichen zwischen 0° und 50°, insbesondere zwischen 20° und 40°, vorzugsweise 35°, möglich.

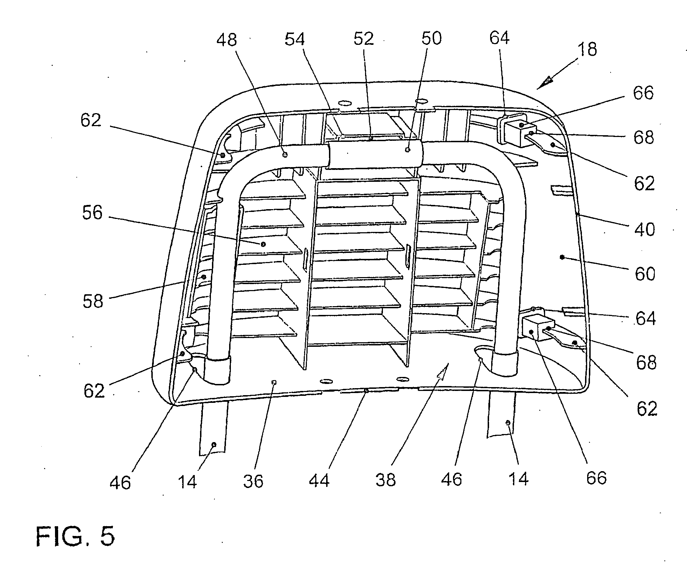

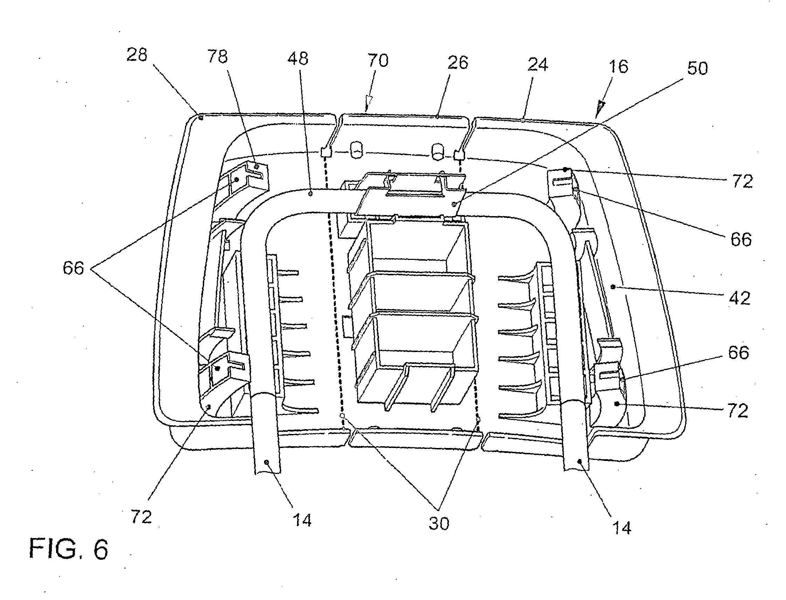

Figur 5 zeigt eine schematische Perspektivansicht des zweiten Teiles 18, während Figur 6 eine schematische Perspektivansicht des ersten Teiles 16 zeigt.

Das zweite Teil 18 besteht aus einem schalenförmigen Element 34, wobei von einem Umfassungsrand 36 ein Innenraum 38 umschlossen wird. Eine Außenkontur 40 des zweiten Teiles 18 ist einer Innenkontur 42 des ersten Teiles 16 (Figur 6) angepasst. Hierdurch sind die Teile 16 und 18 zumindest teilweise ineinander steckbar ausgebildet, wie dies in den Figuren 2 und 3 dargestellt ist. Insbesondere sind die Teile 16 und 18 so weit ineinander steckbar, dass bei verschwenkten seitlichen Teilelementen 24 und 26 des Teiles 16, wie dies in Figur 4 verdeutlicht ist, der Umfassungsrand 36 des Teiles 18 noch innerhalb des Teiles 16 verbleibt. Hierdurch wird eine größere Spaltbildung zwischen den Teilen 16 und 18 bei verschwenkten Teilelementen 24 und 26 vermieden.

Der in Richtung des Kraftfahrzeugsitzes weisende Abschnitt 44 des Umfassungsrandes 36 besitzt zwei Langlöcher 46, durch die die Haltestangen 14 der Halteeinrichtung 12 geführt sind. Die Haltestangen 14 sind über einen horizontal verlaufenden Schenkel 48 miteinander verbunden. Der Schenkel 48 durchgreift eine Hülse 50, die ihrerseits mit dem Teil 18 form- und/oder kraftschlüssig verbunden ist. Hierzu besitzt die Hülse 50 einen Steckabschnitt 52, der im Wesentlichen radial zum Schenkel 48 verläuft. Der Steckabschnitt 52 ist in eine komplementär ausgebildete Aufnahme 54 des Teiles 18 einsteckbar. Hierbei kann zwischen Steckabschnitt 52 und 54 eine reibschlüssige Verbindung, eine Rastverbindung oder dergleichen erfolgen.

Ein Außendurchmesser des Schenkels 48 entspricht im Wesentlichen einem Innendurchmesser der Hülse 50. Zwischen Hülse 50 und Schenkel 48 ist ein Reibschluss ausgebildet. Unter Aufbringung einer durch diesen Reibschluss vorgebbaren Mindestkraft kann durch eine derartige Ausgestaltung das Teil 18 um den Schenkel 48 verschwenkt werden. Der Schenkel 48 bildet somit die horizontale Drehachse der Kopfstütze 10. Eine Begrenzung dieser Schwenkbewegung ist durch die Geometrie der Langlöcher 46 vorgebbar.

Zum Innenraum 38 gerichtet, bildet das Teil 18 eine Rippenstruktur 56 aus, die eine mechanische Stabilität des Teiles 18 sicherstellt. Gleichzeitig bilden Randbereiche 58 der Rippenstruktur 56 Anschläge aus, die in Anlagekontakt mit den Haltestangen 14 gelangen können. Je nach Neigungsverstellung des Teiles 18 kommen mehr oder wenige dieser Randbereiche 58 in Anlagekontakt mit den Haltestangen 14. Hierdurch wird eine Abstützung des Teiles 18 gewährleistet.

Die Ansicht in Figur 5 verdeutlicht ferner, dass an der Innenwandung 60 des Teiles 18 kragenförmige Schultern 62 ausgebildet sind. Diese Schultern 62 stellen - in noch zu erläuternder Weise - Führungselemente für die Teilelemente 24 und 26 des ersten Teiles 16 dar.

Die die Führungselemente bildenden Schultern 62 besitzen einen Anschlag 64, der einen Bewegungsendanschlag für auf den Schultern 62 geführte Reibelemente 66 bildet. Die Reibelemente 66 besitzen einen randoffenen Schlitz 68, mittels dem die Reibelemente 66 auf die Schultern 62 quasi aufgesteckt sind. Die Reibelemente 66 sind Bestandteil des ersten Teiles 16 und in Figur 5 nur zur besseren Verdeutlichung dargestellt.

Wie Figur 6 verdeutlicht, ist das erste Teil 16 ebenfalls als schalenförmiges Element 70 ausgebildet, wobei die drei Teilelemente 24, 26 und 28 erkennbar sind. Die Teilelemente 24 und 28 sind mit dem Teilelement 26 jeweils über ein Filmscharnier 30 verbunden. In der in Figur 6 gezeigten Darstellung ist ebenfalls die Halteeinrichtung 12 mit ihren Haltestangen 14 dargestellt. Ferner ist die den Schenkel 48 umgreifende Hülse 50 dargestellt, die in die Aufnahme 54 des zweiten Teiles 18 eingreift.

Von den Teilelementen 24 und 28 erstrecken sich bogenförmige Kragarme 72. Die Kragarme 72 dienen der formschlüssigen und/oder kraftschlüssigen Aufnahme der Reibelemente 66. Die Reibelemente 66 besitzen somit eine definierte Position zu den Teilelementen 24 beziehungsweise 28.

Bei komplettierter Kopfstütze 10, wie dies in den Figuren 1 bis 4 dargestellt ist, greifen die Schultern 62 in die Schlitze 68 der Reibelemente 66 ein. Hierdurch wird eine Führung für die Teilelemente 24 und 28 erreicht. Diese Teilelemente 24 und 28 sind somit um die durch die Filmscharniere 30 gebildeten, im Wesentlichen vertikal verlaufenden Drehachsen verlagerbar, wie dies in Figur 4 verdeutlicht ist. Über den Reibschluss zwischen den Reibelementen 66 und den Schultern 62 ist hierbei eine stufenlose Feststellung der Teilelemente 24 und 28 in wählbaren Positionen möglich.

### BEZUGSZEICHENLISTE

- 10: Kopfstütze
- 12: Halteeinrichtung
- 14: Haltestangen
- 16: erster Teil Kopfstütze 10
- 18: zweiter Teil Kopfstütze 10
- 20: Schwenkrichtung Kopfstütze 10
- 22: Auswölbung
- 24: Teilelement von 16
- 26: Teilelement von 16
- 28: Teilelement von 16
- 30: Filmscharnier
- 32: Verlagerungsrichtung
- 34: schalenförmiges Element
- 36: Umfassungsrand
- 38: Innenraum
- 40: Außenkontur
- 42: Innenkontur
- 44: Abschnitt von 36
- 46: Langlöcher
- 48: Schenkel
- 50: Hülse
- 52: Steckabschnitt
- 54: Aufnahme
- 56: Rippenstruktur
- 58: Randbereiche
- 60: Innenwandung
- 62: kragenförmige Schultern
- 64: Anschlag
- 66: Reibelemente
- 68: randoffener Schlitz
- 70: schalenförmiges Element
- 72: Kragarme

## Patentansprüche

1. Kopfstütze (10), insbesondere für einen Kraftfahrzeugsitz, mit
- wenigstens einem, relativ zu einer Halteeinrichtung (12) der Kopfstütze (10) verlagerbaren Element (24, 26) eines ersten Teiles (16), welches mit einem zweiten Teil (18) in Verbindung steht,
- wobei wenigstens ein Element (24, 26) des ersten Teiles (16) um wenigstens eine vertikale Drehachse verlagerbar und
- das erste Teil (16) über wenigstens eine reibschlüssige Verbindung mit dem zweiten Teil (18) verbunden ist,
**dadurch gekennzeichnet, dass**
- das wenigstens eine Element (24,26) des ersten Teiles (16) Reibelemente (66) mit randoffenen Schlitzen (68) umfasst, in die am zweiten Teil (18) ausgebildete Führungselemente eingreifen, wodurch
das wenigstens eine Element (24, 26) des ersten Teiles in jeweils wählbaren, verlagerten Positionen im Inneren der Kopfstütze (10) feststellbar ist.

2. Kopfstütze (10) nach Anspruch 1, **dadurch gekennzeichnet, dass** durch eine Schwenkbewegung des zweiten Teiles (18) relativ zu der Halteeinrichtung (12) unter Mitverlagerung des ersten Teiles (16) eine Verlagerung der Kopfstütze (10) um wenigstens eine horizontale Drehachse ausführbar ist.

3. Kopfstütze (10) nach Anspruch 1, **dadurch gekennzeichnet, dass** das erste Teil (16) aus drei Teilelementen (24, 26, 28) besteht, wobei die Teilelemente (24, 26) mit dem Teilelement (28) über jeweils ein Filmscharnier (30) verbunden sind.

4. Kopfstütze (10) nach Anspruch 2, **dadurch gekennzeichnet, dass** das zweite Teil (18) über eine reibschlüssige Verbindung mit der Halteeinrichtung (12) verbunden ist.

5. Kopfstütze (10) nach Anspruch 2 und/oder 4, **dadurch gekennzeichnet, dass** die Halteeinrichtung (12) eine Hülse (50) umfasst, die von einem Schenkel (48) der Halteeinrichtung (12) durchgriffen wird und die mit dem zweiten Teil (18) verbunden ist.

6. Kopfstütze (10) nach Anspruch 1, **dadurch gekennzeichnet, dass** die Teile (16, 18) schalenförmig ausgebildet sind, wobei eine Innenkontur (42) des ersten Teiles (16) einer Außenkontur (40) des zweiten Teiles (18) angepasst ist.

## Claims

1. Headrest (10), particularly for a motor vehicle seat, having
- at least one element (24, 26), which is displaceable relative to a holding device (12) of the headrest (10), of a first part (16) which is connected to a second part (18),
- with at least one element (24, 26) of the first part (16) being displaceable about at least one vertical rotational axis, and
- the first part (16) being connected to the second part (18) by means of at least one frictionally locking connection,
**characterized in that**
- the at least one element (24, 26) of the first part (16) comprises friction elements (66) with slots (68) which are open at the edge and into which guide elements formed on the second part (18) engage, as a result of which
the at least one element (24, 26) of the first part can be fixed in each case in selectable, displaced positions in the interior of the headrest (10).

2. Headrest (10) according to Claim 1, **characterized in that** a displacement of the headrest (10) about at least one horizontal rotational axis can be carried out by means of a pivoting movement of the second part (18) relative to the holding device (12) with concomitant displacement of the first part (16).

3. Headrest (10) according to Claim 1, **characterized in that** the first part (16) is composed of three sub-elements (24, 26, 28), with the sub-elements (24, 26) being connected to the sub-element (28) by means of in each case one film hinge (30).

4. Headrest (10) according to Claim 2, **characterized in that** the second part (18) is connected to the holding device (12) by means of a frictionally locking connection.

5. Headrest (10) according to Claim 2 and/or 4, **characterized in that** the holding device (12) comprises a sleeve (50) through which a limb (48) of the holding device (12) extends and which is connected to the second part (18).

6. Headrest (10) according to Claim 1, **characterized in that** the parts (16, 18) are of shell-shaped design, with an inner contour (42) of the first part (16) being matched to an outer contour (40) of the second part (18).

## Revendications

1. Appui-tête (10), en particulier pour un siège de véhicule automobile, comprenant :
- au moins un élément (24, 26) déplaçable par rapport à un dispositif de retenue (12) de l'appui-tête (10), d'une première partie (16), qui est en liaison avec une deuxième partie (18),
- au moins un élément (24, 26) de la première partie (16) pouvant être déplacé autour d'au moins un axe de rotation vertical et
- la première partie (16) étant connectée par le biais d'au moins une connexion par engagement par friction à la deuxième partie (18),
**caractérisé en ce que**
- l'au moins un élément (24, 26) de la première partie (16) comprend des éléments de friction (66) avec des fentes ouvertes au bord (68), dans lesquelles s'engagent des éléments de guidage réalisés sur la deuxième partie (18), de sorte que
l'au moins un élément (24, 26) de la première partie puisse être fixé dans des positions décalées respectives pouvant être sélectionnées, à l'antérieur de l'appui-tête (10).

2. Appui-tête (10) selon la revendication 1, **caractérisé en ce que** par un mouvement de pivotement de la deuxième partie (18) par rapport au dispositif de retenue (12), en décalant en même temps la première partie (16), on peut réaliser un décalage de l'appui-tête (10) autour d'au moins un axe de rotation horizontal.

3. Appui-tête (10) selon la revendication 1, **caractérisé en ce que** la première partie (16) se compose de trois éléments partiels (24, 26, 28), les éléments partiels (24, 26) étant connectés à l'élément partiel (28) par le biais d'une charnière à film (30) respective.

4. Appui-tête (10) selon la revendication 2, **caractérisé en ce que** la deuxième partie (18) est connectée par le biais d'une connexion par engagement par friction au dispositif de retenue (12).

5. Appui-tête (10) selon la revendication 2 et/ou 4, **caractérisé en ce que** le dispositif de retenue (12) comprend une douille (50) qui est traversée par une branche (48) du dispositif de retenue (12) et qui est connectée à la deuxième partie (18).

6. Appui-tête (10) selon la revendication 1, **caractérisé en ce que** les parties (16, 18) sont réalisées en forme de coque, un contour interne (42) de la première partie (16) étant adapté à un contour externe (40) de la deuxième partie (18).
